# EUROPEAN PATENT APPLICATION

(11) **EP 4 250 503 A1**
(43) Date of publication of application: **27.09.2023**
(21) Application number: 21894502.0
(22) Date of filing: 08.11.2021
(51) Int. Cl.: H02G 1/14

(54) **CORE WIRE SEPARATING DEVICE**

(30) Priority: 17.11.2020 JP 2020191051
(71) Applicant: ShinMaywa Industries, Ltd., Takarazuka-shi, Hyogo 665-8550 (JP)
(72) Inventor: TAKAHASHI Yoshiki, Takarazuka-shi, Hyogo 665-8550 (JP); SHIRAI Hiroaki, Takarazuka-shi, Hyogo 665-8550 (JP); OKADA Morihiro, Takarazuka-shi, Hyogo 665-8550 (JP)
(74) Representative: Grünecker Patent- und Rechtsanwälte PartG mbB
(86) International application number: PCT/JP2021/040964
(87) International publication number: WO 2022/107628

(57) **Abstract**

[Solution] A core wire separation apparatus 10 according to the present invention includes a holding device 20 holding a multi-core cable 1 including a drain wire 2 and a plurality of core wires 3 each exposed from a sheath 5; a separation member 30 separating the drain wire 2 and the plurality of core wires 3 from each other; and a moving device 40 moving the separation member 30 in a moving direction B1 crossing an axial direction X of the multi-core cable 1 held by the holding device 20. The separation member 30 includes hooking portions 31b and 32b that do not hook the drain wire 2 but hooks the plurality of core wires 3 while the separation member 30 is moved in the moving direction B1.

## Description

### Technical Field

The present invention relates to a core wire separation apparatus.

### Background Art

Conventionally, a multi-core cable including a drain wire, a plurality of core wires, and a sheath covering the drain wire and the plurality of core wires is known. In general, the drain wire and the core wires are processed separately after the sheath is peeled off from a tip portion of such a multi-core cable. For example, Patent Literature 1 discloses a method by which core wires and a drain wire are pulled off from an end of a multi-core cable having a sheath thereof peeled off, and then the drain wire is processed in a manner different from that used on the core wires. According to the disclosure of Patent Literature 1, the drain wire is, after being separated from the core wires, inserted into a thermally shrinkable tube and molded as one body. The drain wire is then processed to be sealed against water.

### Citation List

### Patent Literature

Patent Literature 1: Japanese Laid-Open Patent Publication No. 2008-108684

### Summary of Invention

### Technical Problem

The work of separating the drain wire and the core wires from each other as, for example, described above, is conventionally performed manually. If such a separation work is performed automatically by a core wire separation apparatus, the efficiency of the wire processing is improved.

The present invention, made in light of such a point, has an object of providing a core wire separation apparatus capable of separating a drain wire and a plurality of core wires of a multi-core cable from each other.

### Solution to Problem

A core wire separation apparatus according to the present invention includes a holding device holding a multi-core cable including a drain wire and a plurality of core wires each exposed from a sheath; a separation member separating the drain wire and the plurality of core wires from each other; and a moving device moving the separation member in a moving direction crossing an axial direction of the multi-core cable held by the holding device. The separation member includes a hooking portion that does not hook the drain wire but hooks the plurality of core wires while the separation member is moved in the moving direction.

With the above-described core wire separation apparatus, while the separation member is moved by the moving device, the plurality of core wires are hooked by the hooking portion of the separation member. The plurality of the core wires are hooked by the separation member and the separation member is moved, and as a result, the plurality of core wires are bent. By contrast, the drain wire is not hooked by the separation member, and therefore is not bent. As a result, the drain wire and the plurality of core wires of the multi-core cable are separated from each other.

The hooking portion may be located beyond, in a direction opposite to the moving direction, the plurality of core wires held by the holding device. While the separation member is moved in the moving direction, the hooking portion is moved so as to cross an axis of the multi-core cable as seen in a perpendicular direction perpendicular to the axial direction of the multi-core cable and to the moving direction.

With the above-described core wire separation apparatus, while being moved in the moving direction, the separation member is moved so as to cross the axis of the multi-core cable as seen in the perpendicular direction. In this state, the hooking portion is located beyond the plurality of core wires in the direction opposite to the moving direction. Therefore, the separation member is moved in the moving direction, and as a result, the hooking portion hooks the core wires.

The hooking portion may be located beyond, in the direction opposite to the moving direction, the plurality of core wires held by the holding device. While the separation member is moved in the moving direction, the hooking portion may overlap at least a part of the plurality of core wires and may be away from the drain wire as seen in the moving direction.

With the above-described core wire separation apparatus, the hooking portion overlaps at least a part of the plurality of core wires as seen in the moving direction. Therefore, the separation member is moved in the moving direction, and as a result, the hooking portion hooks the core wires. The hooking portion is away from the drain wire as seen in the moving direction. Therefore, even while the separation member is moved in the moving direction, the hooking portion does not hook the drain wire.

According to a preferred embodiment of the core wire separation apparatus of the present invention, where a direction perpendicular to the axial direction of the multi-core cable and to the moving direction is referred to as a perpendicular direction, one of two components of the perpendicular direction is referred to as a first perpendicular direction, and the other of the two components of the perpendicular direction is referred to as a second perpendicular direction, the holding device holds the multi-core cable such that a part of the plurality of core wires is located beyond the drain wire in the first perpendicular direction and another part of the plurality of core wires is located beyond the drain wire in the second perpendicular direction. The hooking portion includes a first hooking portion located beyond, in the first perpendicular direction, the drain wire held by the holding device, and a second hooking portion located beyond, in the second perpendicular direction, the drain wire held by the holding device.

With the above-described core wire separation apparatus, the core wires located beyond the drain wire in the first perpendicular direction and the core wires located beyond the drain wire in the second perpendicular direction are respectively hooked by the first hooking portion and the second hooking portion. Therefore, the plurality of core wires are separated from the drain wire efficiently.

According to a preferred embodiment of the above-described core wire separation apparatus, the separation member further includes a driving mechanism moving the first hooking portion and the second hooking portion in the perpendicular direction. The driving mechanism allows the first hooking portion to retract to a position beyond, in the first perpendicular direction, the plurality of core wires held by the holding device, and allows the second hooking portion to retract to a position beyond, in the second perpendicular direction, the plurality of core wires held by the holding device.

With the above-described core wire separation apparatus, the driving mechanism moves the first hooking portion and the second hooking portion in the perpendicular direction, and thus allows the first hooking portion and the second hooking portion to retract to the positions outer to the core wires in the perpendicular direction. Therefore, while the separation member is returned to an original position thereof in order to separate the drain wire and the core wires of a next multi-core cable, the first hooking portion and the second hooking portion are prevented from contacting the core wires and the drain wire of the next multi-core cable.

According to a preferred embodiment of the above-described core wire separation apparatus, the separation member further includes a first arm and a second arm. The first arm is provided beyond the first hooking portion in the first perpendicular direction and extends so as to cross the plurality of core wires held by the holding device as seen in the perpendicular direction. The second arm is provided beyond the second hooking portion in the second perpendicular direction and extends so as to cross the plurality of core wires held by the holding device as seen in the perpendicular direction.

With the above-described core wire separation apparatus, the first arm and the second arm sandwich the core wires from the positions outer thereto in the perpendicular direction. Therefore, an inconvenience is suppressed that while the separation member is moved in the moving direction, the core wires escape outward in the perpendicular direction and are not bent.

According to a preferred embodiment of the above-described core wire separation apparatus, the separation member further includes a driving mechanism moving at least one of the first arm and the second arm in the perpendicular direction. The driving mechanism moves at least one of the first arm and the second arm to cause the first arm and the second arm to grip the plurality of core wires.

With the above-described core wire separation apparatus, the driving mechanism moves the first arm and the second arm inward in the perpendicular direction, and thus allows the first arm and the second arm to grip the plurality of core wires. As a result, while the separation member is moved, the core wires are rubbed by the first arm and the second arm. Therefore, the core wires are separated while the shape thereof is corrected.

According to a preferred embodiment of the above-described core wire separation apparatus, the separation member includes a restriction portion located beyond, in the moving direction, the plurality of core wires held by the holding device.

With the above-described core wire separation apparatus, the restriction portion restricts the movement of the plurality of core wires such that while the separation member is moved in the moving direction, the plurality of core wires do not escape in the moving direction. Therefore, the core wires are separated stably.

According to a preferred embodiment of the core wire separation apparatus of the present invention, the drain wire and the plurality of core wires are exposed from the sheath at a tip portion of the multi-core cable. The moving direction is oblique with respect to the axial direction of the multi-core cable so as to be farther away from an axis of the multi-core cable as being closer to the tip portion of the multi-core cable.

According to the knowledge of the present inventors, when a plurality of core wires are to be bent by a core wire separation device as described above, the bending angle is preferably smaller than 90 degrees. In this case, the core wires are bent advantageously. With the above-described core wire separation apparatus, the plurality of core wires are bent in a direction oblique to the axial direction of the multi-core cable so as to be farther away from the axis of the multi-core cable as being closer to the tip portion of the multi-core cable. In other words, the plurality of core wires are bent at an angle smaller than 90 degrees. Therefore, the plurality of core wires are bent advantageously.

According to a preferred embodiment of the above-described core wire separation apparatus, the hooking portion includes a contact surface contacting the plurality of core wires while the separation member is moved in the moving direction. The contact surface extends in a direction oblique with respect to the axial direction of the multi-core cable so as to be farther away from the axis of the multi-core cable as being closer to the tip portion of the multi-core cable.

With the above-described core wire separation apparatus, the angle between the direction in which the contact surface contacting the core wires extends and the moving direction of the separation member is decreased. The direction in which the contact surface extends and the moving direction of the separation member are closer to be parallel to each other. Therefore, the plurality of core wires are aligned along the contact surface more smoothly. As a result, the plurality of core wires are bent more smoothly.

According to a preferred embodiment of the above-described core wire separation apparatus, while the separation member is moved in the moving direction, the hooking portion first hooks a border portion, of the plurality of core wires, bordering on the sheath.

With the above-described core wire separation apparatus, the border portion, which is a root portion of the core wires, is first hooked by the hooking portion, and therefore, almost the entirety of the core wires is separated from the drain wire with certainty. The hooking portion merely needs to first hook the border portion of the plurality of core wires. After this, the hooking portion may keep hooking the border portion, or may hook any other portion of the core wires.

### Advantageous Effects of Invention

A core wire separation apparatus according to the present invention is capable of separating a drain wire and a plurality of core wires of a multi-core cable from each other.

### Brief Description of Drawings

FIG. 1 is a schematic cross-sectional view of a multi-core cable.
FIG. 2 is a left side view of a core wire separation apparatus according to embodiment 1.
FIG. 3 is a front view of the core wire separation apparatus.
FIG. 4 is a perspective view of a clamp.
FIG. 5 is a left side view showing the core wire separation apparatus in a state where the clamp is located at a second position.
FIG. 6 is a front view of a holding device and the clamp.
FIG. 7 is a front view showing the clamp in a state of gripping a plurality of core wires.
FIG. 8 is a left side view of a core wire separation device according to embodiment 2.
FIG. 9 is a left side view of a core wire separation device according to embodiment 3.
FIG. 10 schematically shows a separation member according to another embodiment.

### Description of Embodiments

### [Embodiment 1]

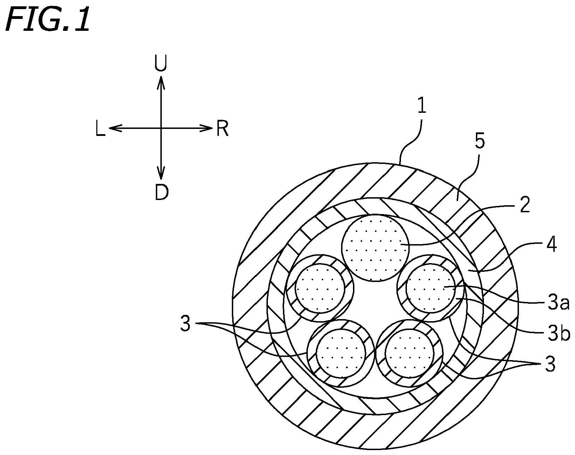

Hereinafter, an embodiment of the present invention will be described with reference to the drawings. First, with reference to FIG. 1, a multi-core cable 1, which is a target of wire processing in this embodiment will be described. FIG. 1 is a schematic cross-sectional view of the multi-core cable 1 according to an example. As shown in FIG. 1, the multi-core cable 1 is an electric wire including a drain wire 2, a plurality of core wires 3, a shield 4, and a sheath 5 covering the drain wire 2, the plurality of core wires 3 and the shield 4. The plurality of core wires 3 are used as, for example, signal lines transmitting electric signals. The plurality of core wires 3 each include a core conductor 3a and an insulating cover 3b covering the core conductor 3a. The shield 4 is a conductor that shields the core wires 3 against external noise. The shield 4 covers outer portions of the plurality of core wires 3. The drain wire 2 is electrically connected with the shield 4. The drain wire 2 is grounded, and therefore, the shield 4 is grounded. The drain wire 2 is formed of a plurality of thin conductive wires, and is not covered with an insulating member. Although not shown, the plurality of core wires 3 and the drain wire 2 are stranded together inside the shield 4. The shield 4 is covered with the sheath 5, which is insulating. There is no specific limitation on the number of the core wires 3.

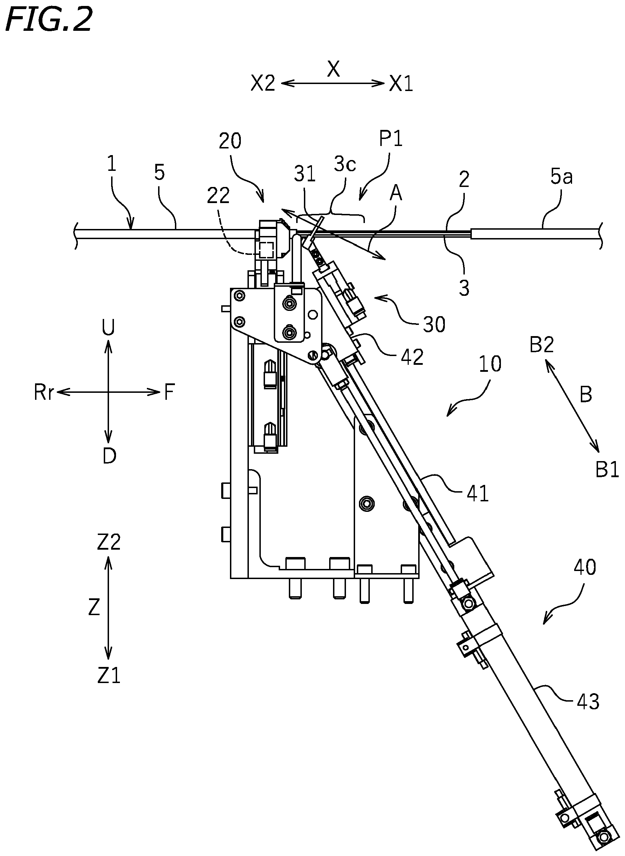

Before being attached to a core wire separation apparatus 10 (see FIG. 2) according to this embodiment, the multi-core cable 1 is subjected to a process of peeling off the sheath 5 at a tip portion thereof and a process of loosening the plurality of core wires 3 and the drain wire 2, which have been stranded together. In this embodiment, the sheath 5 at the tip portion is not pulled off completely from the drain wire 2 and the plurality of core wires 3, and still has tip portions of the drain wire 2 and the plurality of core wires 3 inserted thereinto (see FIG. 2). This is to suppress spread of the drain wire 2 and the plurality of core wires 3 in a loosened state. Hereinafter, the sheath 5 at the tip portion that still has the drain wire 2 and the plurality of core wires 3 inserted thereinto will be represented with reference sign 5a when necessary. The multi-core cable 1 having the above-described processes performed is attached to the core wire separation apparatus 10. The multi-core cable 1 merely needs to have the sheath 5 peeled off such that at least a portion of the drain wire 2 and at least a portion of each of the plurality of core wires 3 are exposed. The portion of the drain wire 2 and the portions of the plurality of core wires 3 that are exposed from the sheath 5 are not limited to being of the tip portion of the multi-core cable 1. The sheath 5a at the tip portion may be pulled off completely from the plurality of core wires 3. Hereinafter, unless otherwise specified, the portion of the drain wire 2 exposed from the sheath 5 will be referred to simply as the "drain wire 2", and each of the portions of the plurality of core wires 3 exposed from the sheath 5 will be referred to simply as the "core wire 3".

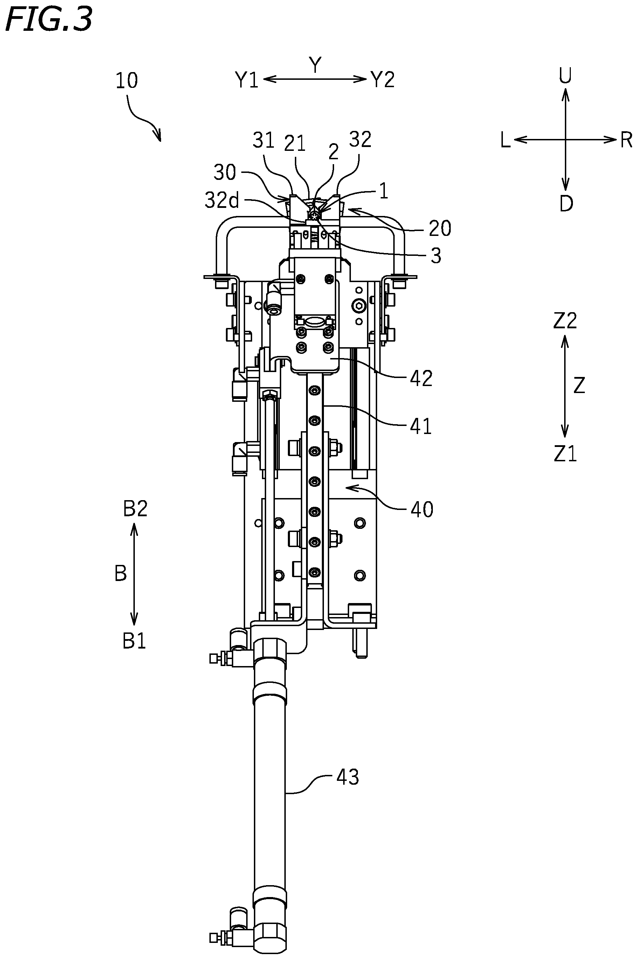

FIG. 2 is a left side view of the core wire separation apparatus 10 according to embodiment 1. FIG. 3 is a front view of the core wire separation apparatus 10. In the following description, the right side of the paper sheet of FIG. 2 will be defined as the front side of the core wire separation apparatus 10. The left side, the right side, the top side and the bottom side of the core wire separation apparatus 10 as seen from the front side will be defined as the left side, the right side, the top side and the bottom side, respectively. A front-rear direction, a left-right direction and a top-bottom direction are perpendicular to each other. In the drawings referred to below, the front side, the rear side, the left side, the right side, the top side and the bottom side will be represented with F, Rr, L, R, U and D, respectively. It should be noted that the directions used in the following description are defined merely for the convenience of explanation, and do not limit the present invention in any way.

As shown in FIG. 2 and FIG. 3, the core wire separation apparatus 10 includes a holding device 20, a clamp 30, a moving device 40, and a controller (not shown). The holding device 20 holds the multi-core cable 1 in a predetermined orientation and at a predetermined position. The clamp 30 is an example of separation member that separates the drain wire 2 and the plurality of core wires 3 from each other. The moving device 40 moves the clamp 30. The core wire separation apparatus 10 moves the clamp 30 by the moving device 40 in a state where the plurality of core wires 3 are hooked by the clamp 30 and as a result, bends the plurality of core wires 3. The plurality of core wires 3 are bent and as a result, are separated from the drain wire 2.

The holding device 20 holds the multi-core cable 1, having a portion of the sheath 5 peeled off, in a predetermined direction. In this embodiment, the above-mentioned predetermined direction is the front-rear direction as shown in FIG. 2. The multi-core cable 1 held by the holding device 20 extends in the front-rear direction. The multi-core cable 1 has the sheath 5 peeled off from the tip portion thereof on the front side. The holding device 20 holds a portion, of the multi-core cable 1, in which the sheath 5 remains. The holding device 20 holds the multi-core cable 1 at a position rear to the exposed portion of the drain wire 2 and each of the exposed portions of the plurality of core wires 3. In a state where the multi-core cable 1 is held by the holding device 20, the exposed portions of the drain wire 2 and the plurality of core wires 3 are held in the air to the front of the holding device 20 and extend substantially in the front-rear direction. Hereinafter, the front-rear direction will referred to also as an "axial direction X of the multi-core cable 1" or simply as an "X direction". Hereinafter, a forward component of the X direction will be referred to also as an "X1 direction", and a rearward component of the X direction will be referred to also as an "X2 direction".

The holding device 20 includes clamp claws 21 and a holding actuator 22 moving the clamp claws 21. The holding actuator 22 is, for example, an air cylinder. The multi-core cable 1 is grasped or released by the clamp claws, which are each movable in a diametrical direction of the multi-core cable 1 by the holding actuator 22. It should be noted that there is no specific limitation on the structure of the holding device 20.

The holding device 20 holds the multi-core cable 1 in a predetermined orientation with respect to a circumferential direction. In more detail, as shown in FIG. 3, the holding device 20 holds the multi-core cable 1 in such an orientation that the drain wire 2 is at the 12 o'clock position as seen in the front-rear direction (see also FIG. 1, in which the multi-core cable 1 is shown in the same orientation). The orientation of the multi-core cable 1 may be visually adjusted by an operator, or may be adjusted by a device that adjusts the orientation of the multi-core cable 1. The device that adjusts the orientation of the multi-core cable 1 may include, for example, a camera that senses the position of the drain wire 2 and a mechanism that rotates the multi-core cable 1 about an axis thereof. The multi-core cable 1 may be automatically transported from the device that adjusts the orientation of the multi-core cable 1 to the holding device 20 and may be held automatically by the holding device 20.

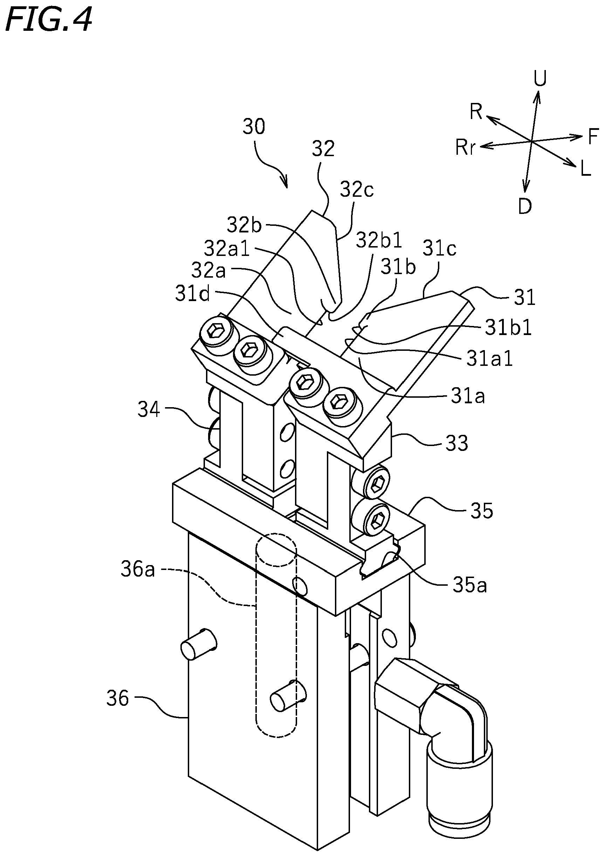

The clamp 30 is provided to the front of the holding device 20 (beyond the holding device 20 in the X1 direction). FIG. 4 is a perspective view of the clamp 30. As shown in FIG. 4, the clamp 30 includes a first clamp arm 31, a second clamp arm 32, a first arm support member 33, a second arm support member 34, a guide member 35, and a driving mechanism 36. The first clamp arm 31 and the second clamp arm 32 are to contact the plurality of core wires 3. The first clamp arm 31 is supported by the first arm support member 33. The second clamp arm 32 is supported by the second arm support member 34. The guide member 35 supports the first arm support member 33 and the second arm support member 34 such that the first arm support member 33 and the second arm support member 34 are slidable in the left-right direction. The driving mechanism 36 moves the first clamp arm 31 and the second clamp arm 32 in the left-right direction via the first arm support member 33 and the second arm support member 34.

As shown in FIG. 4, the first clamp arm 31 includes a first arm 31a and a first claw 31b. The first arm 31a extends obliquely with respect to a horizontal plane. In more detail, the first arm 31a extends obliquely with respect to the axial direction X so as to extend upward as extending forward (extending in the X1 direction, namely, toward the tip portion of the multi-core cable 1) as seen in the left-right direction. As shown in FIG. 4, the first arm 31a also expands in the left-right direction. The first arm 31a is flat plate-like. As shown in FIG. 4, a right side surface of the first arm 31a (inner surface of the clamp 30) includes a first curved portion 31a1. The first curved portion 31a1 has an arcked cross-section protruding rightward (inward in the clamp 30) and extends in the direction in which the first arm 31a extends.

The first claw 31b protrudes rightward (inward in the clamp 30) from the first arm 31a. The first arm 31a is provided to the left of the first claw 31b. The first arm 31a is connected with a left end of the first claw 31b. The first claw 31b includes a first contact surface 31b1, which contacts the plurality of core wires 3 while the clamp 30 is moved in a moving direction B1 described below. In this embodiment, the first contact surface 31b1 is a bottom surface of the first claw 31b. The first contact surface 31b1 extends in an A direction (see FIG. 2; in FIG. 2, the first contact surface 31b1 is not shown) oblique with respect to the axial direction X so as to be farther away from the axis of the multi-core cable 1 (in this embodiment, so as to extend downward) as extending forward (as extending in the X1 direction, namely, toward the tip portion of the multi-core cable 1). In this embodiment, the direction in which the first arm 31a extends and the A direction are perpendicular to each other. As shown in FIG. 4, the first contact surface 31b1 also expands in the left-right direction.

The first clamp arm 31 includes a tip portion extending toward a tip thereof beyond the first claw 31b and the first arm 31a. As shown in FIG. 4, the first clamp arm 31 includes a substantially triangular first chamfered portion 31c at a tip right (inner in the clamp 30) corner thereof. The first chamfered portion 31c causes the tip portion of the first clamp arm 31 to become shorter in the left-right direction as being closer to the tip thereof.

The second clamp arm 32 is located side by side with the first clamp arm 31 in the left-right direction. The second clamp arm 32 is provided to the right of the first clamp arm 31. The second clamp arm 32 is substantially symmetrical to the first clamp arm 31 with respect to a central line of the clamp 30 in the left-right direction. The second clamp arm 32 includes a second arm 32a and a second claw 32b. The second arm 32a extends obliquely with respect to the axial direction X so as to extend upward as extending forward (as extending in the X1 direction) as seen in the left-right direction. The second arm 32a is provided parallel to, and at the same position as, the first arm 31a as seen in the left-right direction. Namely, the second arm 32a is provided so as to overlap the first arm 31a as seen in the left-right direction. A left side surface of the second arm 32a includes a second curved portion 32a1, which is bilaterally symmetrical to the first curved portion 31a1.

The second claw 32b protrudes leftward (inward in the clamp 30) from the second arm 32a. The second arm 32a is provided to the right of the second claw 32b. The second arm 32a is connected with a right end of the second claw 32b. A second contact surface 32b1 of the second claw 32b also extends in the A direction and the left-right direction. The second clamp arm 32 includes a substantially triangular second chamfered portion 32c at a tip left (inner in the clamp 30) corner thereof. In an area where the first chamfered portion 31c and the second chamfered portion 32c face each other, the distance, in the left-right direction, between the first clamp arm 31 and the second clamp arm 32 becomes longer as being closer to the tips of the first clamp arm 31 and the second clamp arm 32 and becomes shorter as being closer to the first claw 31b and the second claw 32b.

As shown in FIG. 4, the first clamp arm 31 includes a first restriction bar 31d extending rightward, namely, toward the second clamp arm 32. The first restriction bar 31d is in contact with a stepped portion formed in the second clamp arm 32. Similarly, the second clamp arm 32 includes a second restriction bar 32d (see FIG. 3) extending leftward, namely, toward the first clamp arm 32 and being in contact with a stepped portion formed in the first clamp arm 31. The first restriction bar 31d and the second restriction bar 32d define a bottom border of a space between the first arm 31a and the second arm 32a. The structure in which the first restriction bar 31d is in contact with the stepped portion formed in the second clamp arm 32 and the second restriction bar 32d is in contact with the stepped portion formed in the first clamp arm 31 allows the first clamp arm 31 and the second clamp arm 32 to be positionally aligned with each other in the up-down direction when the clamp 30 is assembled.

As shown in FIG. 4, the first arm support member 33 and the second arm support member 34 respectively support the first clamp arm 31 and the second clamp arm 32 from below. In this embodiment, the first arm support member 33 and the second arm support member 34 are each formed of two members bound together. It should be noted that the first arm support member 33 and the second arm support member 34 may each be formed of one member.

The guide member 35 supports the first arm support member 33 and the second arm support member 34 such that the first arm support member 33 and the second arm support member 34 are slidable in the left-right direction. The guide member 35 includes a guide groove 35a extending in the left-right direction. The first arm support member 33 and the second arm support member 34 are in slidable engagement with the guide groove 35a. The guide member 35 supports the first arm 31a such that the first arm 31a is slidable in the left-right direction via the first arm support member 33 and a portion of the first clamp arm 31 that is below the first arm 31a. Similarly, the guide member 35 supports the second arm 32a such that the second arm 32a is slidable in the left-right direction via the second arm support member 34 and a portion of the second clamp arm 32 that is below the second arm 32a.

The driving mechanism 36 moves the first arm 31a and the second arm 32a in the left-right direction along the guide member 35. The driving mechanism 36 moves the first claw 31b and the second claw 32b in the left-right direction together with the first arm 31a and the second arm 32a. The driving mechanism 36 includes a clamp actuator 36a and a pair of link members (not shown). The clamp actuator 36a is, for example, an air cylinder. One of the pair of link members is connected with an extendable rod (not shown) of the clamp actuator 36a and also with the first arm support member 33. The other of the pair of link members is connected with the rod of the clamp actuator 36a and also with the second arm support member 34. The rod of the clamp actuator 36a extends or contracts to cause the first arm support member 33 and the second arm support member 34 connected with the rod via the link members to move in the left-right direction along the guide member 35. As a result, the first arm 31a and the second arm 32a move in the left-right direction. It should be noted that there is no specific limitation on the structure of the driving mechanism 36. The driving mechanism 36 may include, for example, an electric motor and a ball screw.

In this embodiment, the driving mechanism 36 moves the first clamp arm 31 and the second clamp arm 32 in association with each other. In this embodiment, the pair of link members of the driving mechanism 36 are bilaterally symmetrical to each other. Therefore, while moving the first clamp arm 31 by a certain distance leftward or rightward, the driving mechanism 36 also moves the second clamp arm 32 by the same distance rightward or leftward. The first clamp arm 31 and the second clamp arm 32 move to be away from each other, or to be closer to each other, with respect to the central line of the clamp 30 in the left-right direction. It should be noted that the driving mechanism 36 may be structured to move the first clamp arm 31 and the second clamp arm 32 independently. Hereinafter, the motion of causing the first clamp arm 31 and the second clamp arm 32 to be closer to each other will be referred to also as "closing the clamp 30", and the motion of causing the first clamp arm 31 and the second clamp arm 32 to be away from each other will be referred to also as "opening the clamp 30". A state where the first clamp arm 31 and the second clamp arm 32 are farthest from each other will be referred to also as an "open state of the clamp 30".

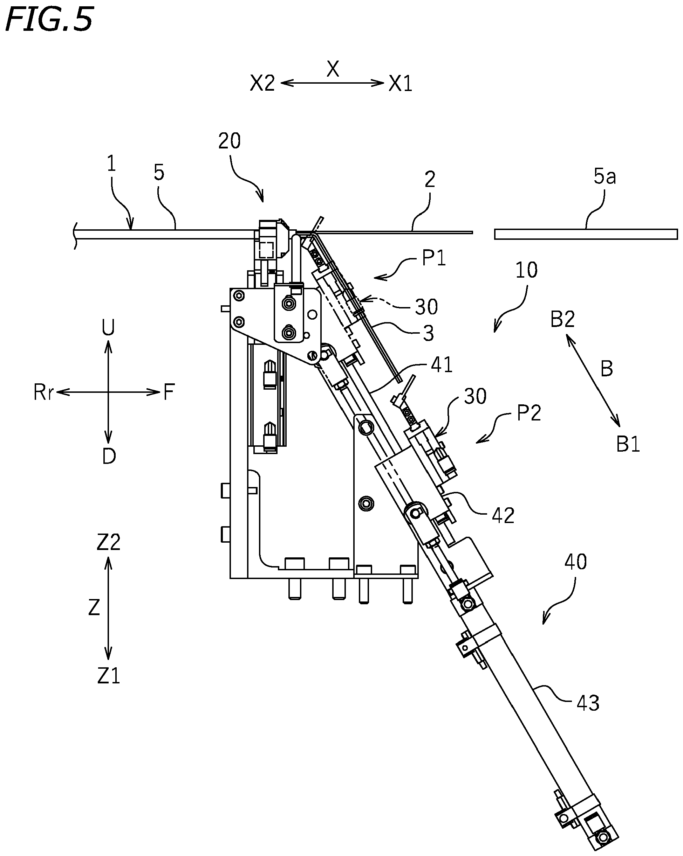

The moving device 40 holds and moves the clamp 30. FIG. 5 is a left side view of the core wire separation apparatus 10 in a state where the clamp 30 is at a bottom end of a movable range thereof. FIG. 2 shows the core wire separation apparatus 10 in a state where the clamp 30 is at a top end of the movable range thereof. Hereinafter, the position of the clamp 30 at the top end shown in FIG. 2 will be referred to also as a "first position P1", and the position of the clamp 30 at the bottom end shown in FIG. 5 will be referred to also as a "second position P2". The moving device 40 moves the clamp 30 between the first position P1 and the second position P2. The first position P1 is such a position of the clamp 30 that the first claw 31b and the second claw 32b are located above the plurality of core wires 3 in a pre-separation state. The second position P2 is such a position of the clamp 30 that the first claw 31b and the second claw 32b are located below the plurality of core wires 3 in the pre-separation state.

In this embodiment, the second position P2 is set to a position that is to the front of the first position P1 (beyond the first position P1 in the X1 direction, namely, in the direction toward the tip portion of the multi-core cable 1) and is below the first position P1. As shown in FIG. 5, the moving device 40 moves the clamp 30 in a direction crossing the axial direction X of the multi-core cable 1. In more detail, the moving device 40 moves the clamp 30 in a direction oblique with respect to the axial direction X (hereinafter, such a direction will be referred to as a "B direction") such that the clamp 30 is farther away from the axis of the multi-core cable 1 (in this embodiment, extends downward) as extending closer to the tip portion of the multi-core cable 1 (in this embodiment, as extending forward). In this embodiment, the B direction is slightly closer to the vertical direction than the A direction. Hereinafter, one of two components of the B direction that is from the first position P1 toward the second position P2 will be referred to also as the "B1 direction", and the other of the two components of the B direction that is from the second position P2 toward the first position P1 will be referred to also as a "B2 direction". The B1 direction is the direction in which the clamp 30 is moved by the moving device 40 to separate the core wires 3. As shown in FIG. 2, FIG. 3 and FIG. 5, the moving device 40 includes a guide rail 41, which extends in the B direction, a slide base 42, and a moving actuator 43. The slide base 42 is in engagement with the guide rail 41 so as to be slidable in the B direction, and supports the clamp 30. The moving actuator 43 is coupled with the slide base 42, and moves the slide base 42 along the guide rail 41. As a result, the clamp 30 moves in the B direction. In this embodiment, the moving actuator 43 is an air cylinder. It should be noted that there is no specific limitation on the structure of the moving device 40.

The core wire separation apparatus 10 includes a controller controlling an operation of each of the elements thereof. The controller is connected with the holding actuator 22, the clamp actuator 36a, and the moving actuator 43, and controls the operations thereof. There is no specific limitation on the structure of the controller. The controller may include, for example, a central processing unit (hereinafter, referred to as a "CPU"), a ROM storing, for example, programs to be executed by the CPU, a RAM, and the like. Each of portions of the controller may be formed of software or hardware. Each of the portions of the controller may be a processor or a circuit. The controller may be, for example, a programmable controller or a computer. An operation performed by the controller to control each of the elements will be described in the following explanation of a separation process of the core wires 3.

### [Core wire separation process]

Hereinafter, an example of process performed by the core wire separation apparatus 10 to separate the core wires 3 will be described.

### [Holding the multi-core cable]

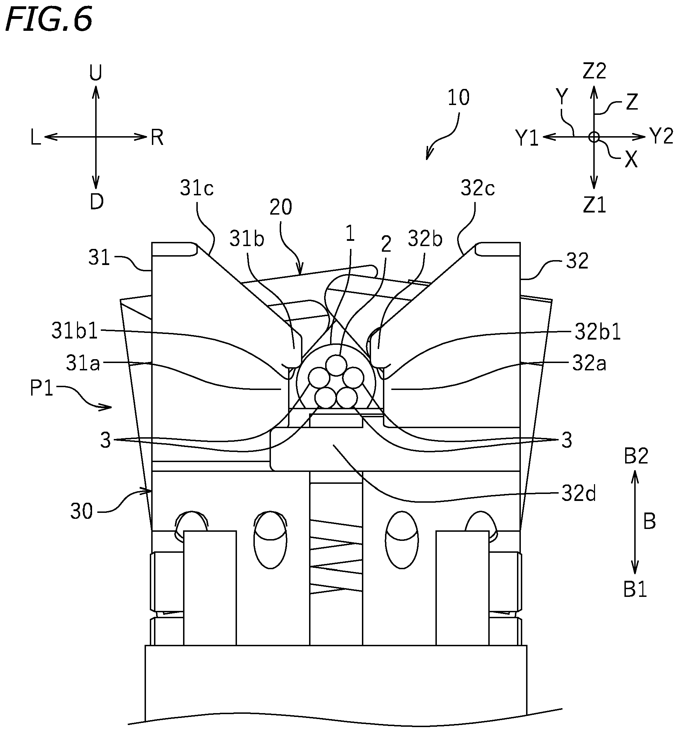

First, the multi-core cable 1 in a state of being set to the holding device 20 will be described. FIG. 6 is a front view of the holding device 20 and the clamp 30 in a state where the multi-core cable 1 is set to the holding device 20. As shown in FIG. 6, the holding device 20 holds the multi-core cable 1 such that a part of the plurality of core wires 3 is located to the left of the drain wire 2 and another part of the plurality of core wires 3 is located to the right of the drain wire 2. In this embodiment, the holding device 20 holds the multi-core cable 1 in such an orientation that the drain wire 2 is at the 12 o'clock position as seen in the front-rear direction. Therefore, the plurality of core wires 3 are located to the left of, and to the right of, the drain wire 2 in a divided manner. The multi-core cable 1 may be set to the holding device 20 in the above-described orientation by the operator. Alternatively, the multi-core cable 1 may be set to the holding device 20 as described above by an automatic device that transports the multi-core cable 1.

Hereinafter, the left-right direction may be referred to also as a "width direction Y of the multi-core cable 1" or simply as a "Y direction". A leftward component of the Y direction will be referred to also as a "Y1 direction", and a rightward component of the Y direction will be referred to also as a "Y2 direction". The width direction Y of the multi-core cable 1 is perpendicular to the axial direction X of the multi-core cable 1 and to the moving direction B 1 of the clamp 30. Hereinafter, the up-down direction will be represented also with letter "Z". A downward component of the Z direction will be referred to also as a "Z1 direction", and an upward component of the Z direction will be referred to also as a "Z2 direction". The up-down direction Z is perpendicular to the axial direction X and to the width direction Y of the multi-core cable 1.

### [Moving the clamp arms]

At the start of the process described herein, the clamp 30 is located at the second position P2 (see FIG. 5) and is in the open state. From this state, the core wire separation apparatus 10 drives the moving device 40 to move the clamp 30 to the first position (see FIG. 2). FIG. 6 shows the clamp 30 located at the first position P1 and being in the open state. As shown in FIG. 6, in the open state of the clamp 30, the first claw 31b is located beyond the plurality of core wires 3 in the Y1 direction. In this state, the first arm 31a, which is provided beyond the first claw 31b in the Y1 direction, is also located beyond the plurality of core wires 3 in the Y1 direction. In the open state of the clamp 30, the second claw 32b is located beyond the plurality of core wires 3 in the Y2 direction. In this state, the second arm 32a, which is provided beyond the second claw 32b in the Y2 direction, is also located beyond the plurality of core wires 3 in the Y2 direction. In the open state of the clamp 30, the first claw 31b, the second claw 32b, the first arm 31a and the second arm 32a are all located outer to the plurality of core wires 3 in the Y direction. In other words, in the open state of the clamp 30, the plurality of core wires 3 are located inner, in the Y direction, to the first claw 31b and the second claw 32b. As shown in FIG. 6, the drain wire 2 is also located inner, in the Y direction, to the first claw 31b and the second claw 32b. The clamp 30 is in the open state while being moved from the second position P2 to the first position P1, and therefore, does not contact the drain wire 2 or the plurality of core wires 3.

The clamp 30 includes the first chamfered portion 31c and the second chamfered portion 32c for the case where the plurality of core wires 3 are partially or entirely located outer, in the Y direction, to the first claw 31b and the second claw 32b in the open state of the clamp 30. While the clamp 30 is moved in the B2 direction, the core wires 3 that are located outer, in the Y direction, to the first claw 31b and the second claw 32b contact the first chamfered portion 31c or the second chamfered portion 32c. Such core wires 3 are guided along the first chamfered portion 31c or the second chamfered portion 32c to a space between the first clamp arm 31 and the second clamp arm 32.

As shown in FIG. 6, when the clamp 30 is located at the first position P1, the first claw 31b and the second claw 32b are located beyond, in the B2 direction, the plurality of core wires 3 held by the holding device 20. As shown in FIG. 2, when the clamp 30 is located at the first position P1, the first arm 31a is located so as to cross the plurality of core wires 3 as seen in the Y direction. Similarly, when the clamp 30 is located at the first position P1, the second arm 32a is located so as to cross the plurality of core wires 3 as seen in the Y direction. As shown in FIG. 6, the plurality of core wires 3 are accommodated in an area that is between the first arm 31a and the second arm 32a and is beyond the first claw 31b and the second claw 32b in the Z1 direction (hereinafter, this area will be referred to as a "gripping area of the clamp 30"). In this state, the first restriction bar 31d (see FIG. 4) and the second restriction bar 32d respectively provided beyond the first arm 31a and the second arm 32a in the B1 direction are located, in the B1 direction, beyond the plurality of core wires 3 held by the holding device 20. In addition, the first restriction bar 31d and the second restriction bar 32d overlap a part of the plurality of core wires 3 as seen in the B direction. The first restriction bar 31d and the second restriction bar 32d define a border, on the side of the B1 direction, of the gripping area of the clamp 30. In this state, the drain wire 2 is located between the first claw 31b and the second claw 32b.

As shown in FIG. 2, when the clamp 30 is moved to the first position P1, the first claw 31b and the second claw 32b (see FIG. 6) are moved to positions above a border portion 3c, of the plurality of core wires 3, bordering on the sheath 5. Herein, the "border portion 3c, of the plurality of core wires 3, bordering on the sheath 5" indicates, for example, 1/3 of the exposed core wires 3 that is closer to the sheath 5. More preferably, the "border portion 3c" is 1/5 of the exposed core wires 3 that is closer to the sheath 5.

### [Gripping the core wires]

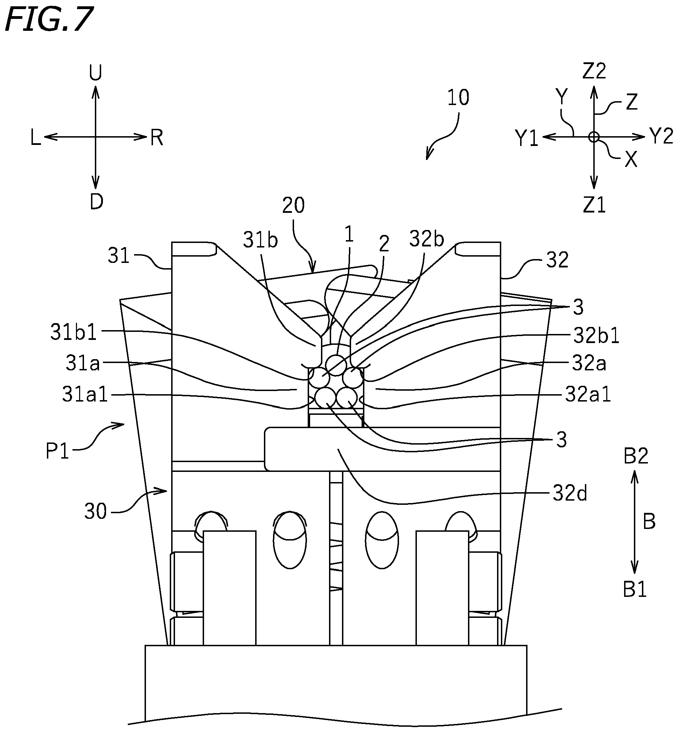

In the next step, the clamp 30 is closed. At this point, the first clamp arm 31 moves in the Y2 direction, and the second clamp arm 32 moves in the Y1 direction. FIG. 7 is a front view of the clamp 30 in a state of gripping the plurality of core wires 3. As shown in FIG. 7, when the clamp 30 is closed, the plurality of core wires 3 are gripped by the first arm 31a and the second arm 32a. In more detail, the plurality of core wires 3 are gripped by the first curved portion 31a1 and the second curved portion 32a1, each having an arcked cross-section, of the first arm 31a and the second arm 32a. The first curved portion 31a1 and the second curved portion 32a1 each having an arcked cross-section do not have any edge. Therefore, damage of the core wires 3, which would be caused by the gripping by the clamp 30, is suppressed. In the state where the plurality of core wires 3 are gripped by the clamp 30, the first claw 31b and the second claw 32b are located so as to overlap the plurality of core wires 3 regarding the width direction Y of the multi-core cable 1. As seen in the B direction, the first claw 31b and the second claw 32b overlap a part of the plurality of core wires 3. The first arm 31a and the second arm 32a grip the core wires 3 by approximately a force with which the core wires 3 slip with respect to the first arm 31a and the second arm 32a while the clamp 30 is moved by the moving device 40.

As shown in FIG. 7, in this state, the drain wire 2 is located closer to the center of the clamp 30 in the Y direction than the plurality of core wires 3, and therefore, is not gripped by the clamp 30. In addition, the drain wire 2 is located closer to the center of the clamp 30 in the Y direction than the first claw 31b and the second claw 32b. Even in the state where the clamp 30 grips the plurality of core wires 3, the first claw 31b is located beyond the drain wire 2 in the Y1 direction (outer in the Y direction). The second claw 32b is located beyond the drain wire 2 in the Y2 direction (outer in the Y direction).

### [Pulling off the sheath]

In the next step, the sheath 5a remaining in a state of not being pulled off from the tip portions of the drain wire 2 and the plurality of core wires 3 is pulled off from the drain wire 2 and the plurality of core wires 3. The pulling may be performed by an automatic device structured to pull off the sheath 5a, or may be pulled off by an operator. The sheath 5a, which holds the drain wire 2 and the plurality of core wires 3 such that the drain wire 2 and the plurality of core wires 3 do not spread and allows the drain wire 2 and the plurality of core wires 3 to be easily accommodated in the gripping area of the clamp 30, comes off from the multi-core cable 1 at this point.

### [Separating the core wires]

In the next step, the clamp 30 is moved to the second position P2 by the moving device 40. In this step, the clamp 30 is moved such that the drain wire 2 held by the holding device 20 is not hooked by the first claw 31b or the second claw 32b but the plurality of core wires 3 held by the holding device 20 are hooked by the first claw 31b and the second claw 32b. The first claw 31b and the second claw 32b are located beyond, in the B2 direction, the plurality of core wires 3 held by the holding device 20, and are moved so as to cross the axis of the multi-core cable 1 as seen in the Y direction while the clamp 30 is moved in the B1 direction. While the clamp 30 is moved in the B1 direction, the first claw 31b and the second claw 32b overlap a part of the plurality of core wires 3 as seen in the B1 direction. As a result, the plurality of core wires 3 are hooked by the first claw 31b and the second claw 32b.

As understood from FIG. 7, while the clamp 30 is moved in the B1 direction, the plurality of core wires 3 come into contact with the first contact surface 32b 1 of the first claw 3 1b or the second contact surface 32b1 of the second claw 32, and are hooked by the first claw 31b or the second claw 32b. While the clamp 30 is moved in the B1 direction, the first claw 31b and the second claw 32b first hook the border portion 3c (see FIG. 2) of the plurality of core wires 3. The first contact surface 31b1 and the second contact surface 32b1 are translated in the B1 direction along with the movement of the clamp 30 in the B1 direction. As a result, the plurality of core wires 3 in contact with the first contact surface 31b1 and the second contact surface 32b1 are bent in the B direction along with the movement of the first contact surface 31b1 and the second contact surface 32b1. While the core wires 3 are bent, the first claw 3 1b and the second claw 32b are located beyond the plurality of core wires 3 in the B2 direction. As a result, the plurality of core wires 3 are kept in contact with the first contact surface 31b1 and the second contact surface 32b2 during the work of bending the core wires 3. The portions of the core wires 3 that are hooked by the first claw 31b and the second claw 32b shift toward the tip portions of the core wires 3 along with the movement of the clamp 30.

While the core wires 3 are bent, the first arm 31a and the second arm 32a cross the plurality of core wires 3 as seen in the Y direction. This suppresses escape of the plurality of core wires 3 to outer positions in the Y direction. The first restriction bar 31d and the second restriction bar 32d, which define the border, on the side of the B1 direction, of the gripping area of the clamp 30, suppress escape of the plurality of core wires 3 in the B1 direction.

The drain wire 2 is located inner, in the Y direction, to the first claw 31b and the second claw 32b, and therefore, is left behind the movement of the clamp 30. While the clamp 30 is moved in the B2 direction, the drain wire 2 escapes to a position outer to the gripping area of the clamp 30 through a gap between the first claw 31b and the second claw 32b. As a result, the drain wire 2 and the plurality of core wires 3 are separated from each other.

The above-described process is merely a preferred example, and the process of separating the core wires 3 is not limited to the above-described process. For example, the multi-core cable 1 may be held by the holding device 20 while the clamp 30 is located at the first position P1 and is in the open state.

### [Functions and effects of embodiment 1]

Hereinafter, functions and effects of the core wire separation apparatus 10 according to this embodiment will be described.

In the core wire separation apparatus 10 according to this embodiment, the holding device 20 holds the multi-core cable 1 in such an orientation that the plurality of core wires 3 are partially located outer to the drain wire 2 in the Y direction (both in the Y1 direction and the Y2 direction). At the time when the core wires 3 are to be separated, the first claw 31b and the second claw 32b are located at positions that overlap a part of the plurality of core wires 3 and are away from the drain wire 2 as seen in the B direction. More specifically, at the time when the core wires 3 are to be separated, the first claw 31b and the second claw 32b are located at positions outer to the drain wire 2 in the Y direction (both in the Y1 direction and the Y2 direction) and inner to the outermost portion, in the Y direction, of the plurality of core wires 3. Therefore, while the clamp 30 is moved by the moving device 40 in the B1 direction, the plurality of core wires 3 are hooked by the first claw 31b and the second claw 32b but the drain wire 2 is not hooked by the first claw 3 1b or the second claw 32b. As a result of the clamp 30 hooking the core wires 3 and moving in the B1 direction, the plurality of core wires 3 are bent. By contrast, the drain wire 2 is not bent even by the movement of the clamp 30. As a result, the drain wire 2 and the plurality of core wires 3 of the multi-core cable 1 are separated from each other.

In addition, in the core wire separation apparatus 10 according to this embodiment, the core wires 3 located beyond the drain wire 2 in the Y1 direction and the core wires 3 located beyond the drain wire 2 in the Y2 direction are respectively hooked by the first claw 31b and the second claw 32b. Therefore, the plurality of core wires 3 are separated from the drain wire 2 efficiently.

The core wire separation apparatus 10 according to this embodiment bends the plurality of core wires 3, not the drain wire 2, and as a result, separates the drain wire 2 and the plurality of core wires 3 from each other. In the multi-core cable 1, each of the core wires 3 has a structure in which the core conductor 3a is covered with the insulating cover 3b. By contrast, the drain wire 2 is formed of the plurality of thin conductive wires, and is not covered with a sheath. Therefore, if it is attempted to move the drain wire 2, there occurs an undesirable possibility that the plurality of conductive wires forming the drain wire 2 are disassembled and that this has an adverse effect on a process to be performed thereafter. The core wire separation apparatus 10 according to this embodiment bends the plurality of core wires 3, not the drain wire 2, and as a result, separates the drain wire 2 and the plurality of core wires 3 from each other. Therefore, a risk that the plurality of conductive wires forming the drain wire 2 are disassembled during the work of separation is decreased.

In the core wire separation apparatus 10 according to this embodiment, the clamp 30 includes the first arm 31a and the second arm 32a. The first arm 31a is provided outer to the first claw 31b in the Y direction, and extends so as to cross the plurality of core wires 3 as seen in the Y direction. The second arm 32a is provided outer to the second claw 32b in the Y direction, and extends so as to cross the plurality of core wires 3 as seen in the Y direction. The first arm 31a and the second arm 32a sandwich the plurality of core wires 3 from the positions outer thereto in the Y direction. Therefore, an inconvenience may be suppressed that while the clamp 30 is moved toward the second position P2, the plurality of core wires 3 escape outward in the Y direction and are not well bent.

In the core wire separation apparatus 10 according to this embodiment, the clamp 30 includes the first restriction bar 31d and the second restriction bar 32d located beyond, in the B1 direction, the plurality of core wires 3 held by the holding device 20. The first restriction bar 31d and the second restriction bar 32d restrict the movement of the plurality of core wires 3 such that while the clamp 30 is moved in the B 1 direction, the plurality of core wires 3 do not escape in the B 1 direction. The first restriction bar 31d and the second restriction bar 32d allow the core wires 3 to be bent stably in the B 1 direction.

In the core wire separation apparatus 10 according to this embodiment, the clamp 30 includes the driving mechanism 36 moving the first arm 31a and the second arm 32b in the Y direction. The driving mechanism 36 moves the first arm 31a and the second arm 32b in the Y direction and allows the first arm 31a and the second arm 32b to grip the plurality of core wires 3. While the clamp 30 is moved by the moving device 40 in a state of gripping the plurality of core wires 3, the core wires 3 are rubbed by the first arm 31a and the second arm 32a. Therefore, the core wires 3 are separated while the shape thereof is corrected. The first restriction bar 31d and the second restriction bar 32d restrict the movement of the plurality of core wires 3 such that while the clamp 30 is moved in the B1 direction, the plurality of core wires 3 do not escape in the B 1 direction, and in this manner, contribute to the stable rubbing of the core wires 3. From the point of view of allowing the plurality of core wires 3 to be gripped, the driving mechanism 36 may be structured to cause either one of the first arm 31a and the second arm 32b to move in the Y direction, or may be structured to cause both of the first arm 31a and the second arm 32b to move in the Y direction.

The driving mechanism 36 allows the first claw 31b to retract to a position outer to the plurality of core wires 3 in the Y direction and allows the second claw 32b to retract to a position outer to the plurality of core wires 3 in the Y direction. Therefore, while the clamp 30 is returned from the second position P2 to the first position P1, the first claw 31b and the second claw 32b are prevented from contacting the core wires 3 and the drain wire 2 of a next multi-core cable 1.

For the core wire separation apparatus 10 according to this embodiment, the B 1 direction, which is the moving direction of the clamp 30, is set to be oblique with respect to the axial direction of the multi-core cable 1 (X direction) so as to be farther away from the axis of the multi-core cable 1 as being closer to the tip portion of the multi-core cable 1. According to the knowledge of the present inventors, when the core wires 3 are to be bent by a core wire separation device as described above, the bending angle is preferably smaller than 90 degrees. In the case where the bending angle is smaller than 90 degrees, the core wires 3 are bent particularly advantageously. The core wire separation apparatus 10 according to this embodiment bends the core wires 3 at an angle smaller than 90 degrees, and therefore, bends the plurality of core wires 3 advantageously.

In the core wire separation apparatus 10 according to this embodiment, the contact surfaces 31b1 and 32b1 of the claws 31b and 32b extend in the A direction oblique with respect to the axial direction of the multi-core cable 1 (X direction) so as to be farther away from the axis of the multi-core cable 1 as being closer to the tip portion of the multi-core cable 1. With such a structure, the angle between the A direction, in which the contact surfaces 31b1 and 32b1 extend, and the B1 direction, which is the moving direction of the clamp 30, is decreased. In other words, the direction in which the contact surfaces 31b1 and 32b1 extend and the moving direction of the clamp 30 are closer to be parallel to each other. Therefore, while the clamp 30 is moved, the plurality of core wires 3 are aligned along the contact surfaces 31b1 and 32b1 smoothly. As a result, the plurality of core wires 3 are bent smoothly.

In the core wire separation apparatus 10 according to this embodiment, while the clamp 30 is moved in the B1 direction, the first claw 31b and the second claw 32b first hook the border portion 3c, of the plurality of core wires 3, bordering on the sheath 5. The first claw 31b and the second claw 32b first hook the border portion 3c, which is a root portion of the core wires 3, and therefore, almost the entirety of the core wires 3 is separated from the drain wire 2 with certainty. The border portion 3c is a portion where the plurality of core wires 3 are assembled relatively close to each other. Therefore, the first claw 31b and the second claw 32b hook the border portion 3c of the plurality of core wires 3 and as a result, bend the plurality of core wires 3 advantageously.

### [Embodiment 2]

In embodiment 2, the moving device and the clamp arms have different structures as those in embodiment 1. Except for these, the core wire separation apparatus in embodiment 2 basically has the same structure as that of the core wire separation apparatus 10 in embodiment 1. In the following description of embodiment 2, elements having substantially the same functions as those of embodiment 1 will bear the same reference signs as in embodiment 1. Overlapping descriptions will be omitted or simplified when appropriate. The directions are the same as in embodiment 1. This is also applicable to the descriptions of embodiment 3 and the other embodiments described below.

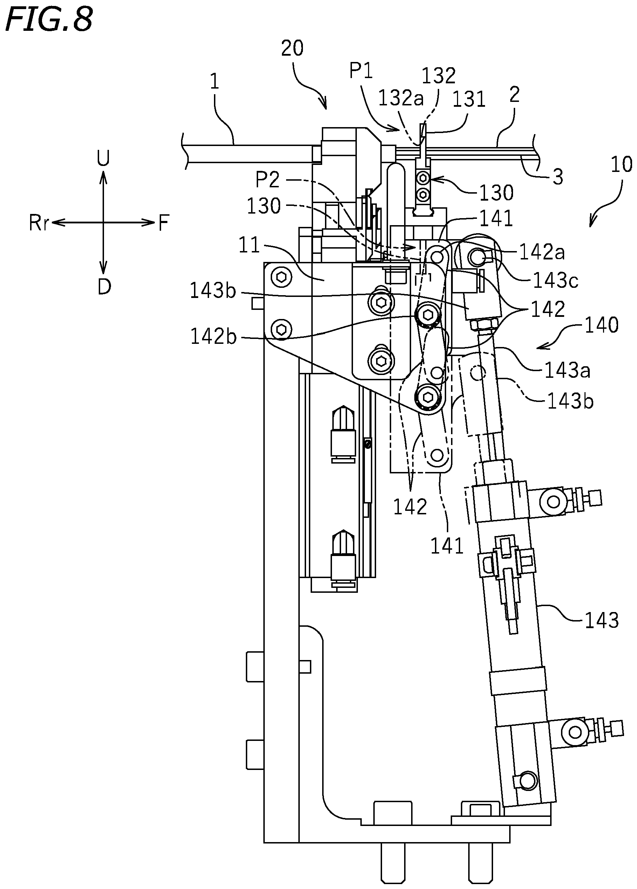

FIG. 8 is a left side view of a core wire separation apparatus 10 according to embodiment 2. As shown in FIG. 8, the core wire separation apparatus 10 according to this embodiment includes the holding device 20 common to embodiment 1. In this embodiment, a clamp 130 includes an arm 131 extending in a direction substantially perpendicular to the axial direction of the multi-core cable 1. A contact surface 132a of a claw 132 extends substantially parallel to the axial direction of the multi-core cable 1.

In this embodiment, a moving device 140 includes a bracket 141, a plurality of link members 142, and an air cylinder 143. The bracket 141 supports the clamp 130. The link members 142 are flat plate-like, and each have rotation shafts 142a and 142b at two ends thereof. The rotation shaft 142a at one of the two ends is connected with a side surface of the bracket 141. The link members 142 are each rotatable about the rotation shaft 142a with respect to the bracket 141. The rotation shaft 142b at the other of the two ends is connected with a frame 11 of the core wire separation apparatus 10. The link members 142 are each rotatable about the rotation shaft 142b with respect to the frame 11. Therefore, the bracket 141 is pivotable with respect to the frame 11 with the rotation shafts 142b as being pivoting axes, and the effect of the rotation shafts 142a allows the bracket 141 to keep the posture thereof constant during the pivoting.

The air cylinder 143 moves the bracket 141 supported by the link members 142 substantially in the up-down direction. The air cylinder 143 includes an extendable rod 143a. The air cylinder 143 is provided such that the rod 143a extends and contracts substantially in the up-down direction. At a tip portion of the rod 143a, a joint 143b including a rotation shaft 143c is provided. The rotation shaft 143c is connected with the bracket 141. An end of the air cylinder 143 opposite to the rod 143a is swingably supported by the frame 11.

The bracket 141, the link members 142 and the joint 143b shown with the solid lines in FIG. 8 represent the bracket 141, the link members 142 and the joint 143b in a state where the rod 143a extends. The bracket 141, the link members 142 and the joint 143b in a state where the rod 143a contracts are shown with the two-dot chain lines. As represented with the solid line and the two-dot chain line of the bracket 141 in FIG. 8, when the air cylinder 143 extends and contracts, the bracket 141 moves substantially in the up-down direction. During this movement, the posture of the bracket 141 is substantially maintained. Therefore, the movement of the bracket 141 by the extension and the contraction of the air cylinder 143 is a translation movement substantially in the up-down direction. Thus, the clamp 130 supported by the bracket 141 also translates substantially the up-down direction.

In this embodiment, the clamp 130 is moved from the first position P1 (solid line) to the second position P2 (two-dot chain line) and as a result, the core wires 3 are bent downward. As can be seen, the moving device 140 may use the link members 142 to substantially translate the clamp 130. The moving device 140 may move the clamp 130 in a direction perpendicular to, or substantially perpendicular to, the axial direction of the multi-core cable 1. The contact surface 132a of the clamp 130 may extend substantially parallel to the axial direction of the multi-core cable 1.

In the above description, the clamp 130 is moved in the direction substantially perpendicular to the axial direction of the multi-core cable 1. Alternatively, the clamp 130 may be moved in a direction oblique with respect to the axial direction of the multi-core cable 1.

### [Embodiment 3]

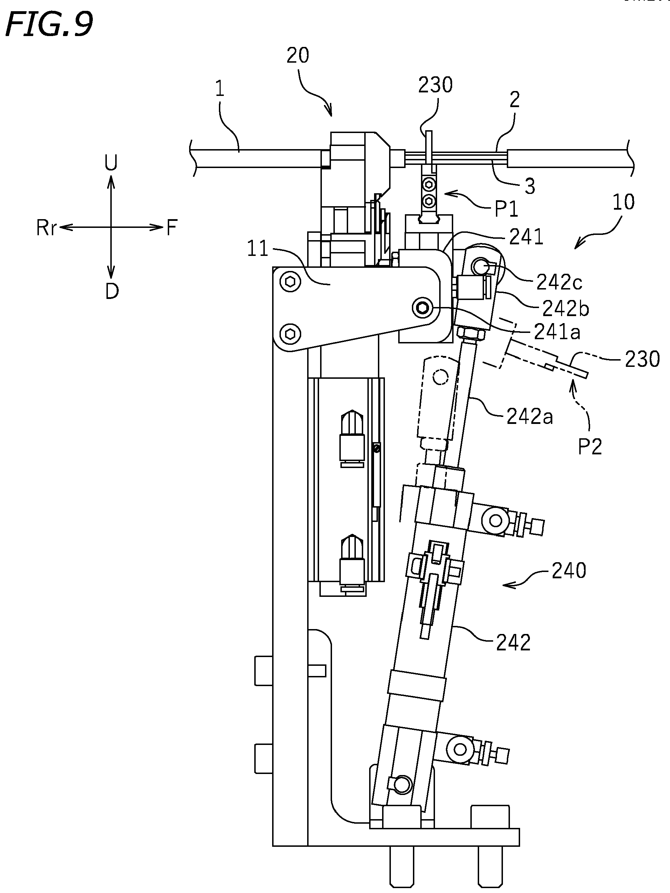

In embodiment 3, the moving device has a different structure as that in embodiment 1 and embodiment 2. FIG. 9 is a left side view of a core wire separation apparatus 10 according to embodiment 3. As shown in FIG. 9, the core wire separation apparatus 10 according to this embodiment includes the holding device 20 common to embodiment 1 and embodiment 2. The core wire separation apparatus 10 according to this embodiment includes a clamp 230 substantially the same as that in embodiment 2.

In this embodiment, a moving device 240 includes a bracket 241 and an air cylinder 242. The bracket 241 supports the clamp 230. The bracket 241 includes a rotation shaft 241a in a bottom portion thereof. The rotation shaft 241a is connected with the frame 11 of the core wire separation apparatus 10. The bracket 241 is rotatable about the rotation shaft 241a with respect to the frame 11.

The air cylinder 242 causes the bracket 241 to pivot about the rotation shaft 241a. The air cylinder 242 includes an extendable rod 242a. The air cylinder 242 is provided such that the rod 242a extends and contracts substantially in the up-down direction. At a tip portion of the rod 242a, a joint 242b including a rotation shaft 242c is provided. The rotation shaft 242c is connected with the bracket 241. An end of the air cylinder 242 opposite to the rod 242a is swingably supported by the frame 11.

The clamp 230 shown with the solid line in FIG. 9 represents the clamp 230 in a state where the rod 242a extends. The clamp 230 in a state where the rod 242a contracts is shown with the two-dot chain line. As represented with the solid line and the two-dot chain line of the clamp 230 in FIG. 9, when the air cylinder 242 extends and contracts, the clamp 230 pivots about the rotation shaft 241a together with the bracket 241.

In this embodiment, the clamp 230 is moved from the first position P1 (solid line) to the second position P2 (two-dot chain line), and as a result, the core wires 3 are bent downward. As can be seen, the moving device 240 may not need to translate the clamp 230. The moving device 240 may rotate the clamp 230 about the rotation shaft extending in a direction perpendicular to the direction in which the core wires 3 are to be bent. The direction in which the clamp 230 is moved by the moving device 240 crosses the axial direction of the multi-core cable 1. As shown in this embodiment, the direction crossing the axial direction of the multi-core cable 1 encompasses a direction that changes moment by moment, such as a moving direction in the case of a pivoting movement.

### [Other embodiments]

Some embodiments of the present invention are described above. The above-described embodiments are merely examples, and the present invention may be carried out in any of various other embodiments. Hereinafter, examples of other embodiments will be described briefly.

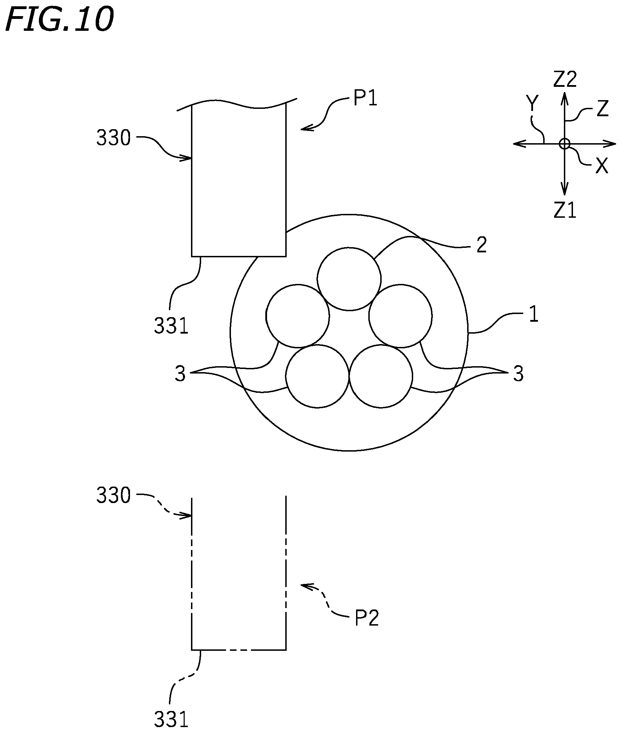

In one of other preferred embodiments, a separation member that separates the drain wire and the plurality of core wires from each other may include only one hooking portion that hooks the core wires. In addition, the separation member does not need to include an arm located to the side of the core wires or a driving mechanism that moves the hooking portion. FIG. 10 schematically shows a separation member 330 according to one of such other embodiments. In FIG. 10, the "X direction" represents the axial direction of the multi-core cable 1, and the "Y direction" represents the width direction of the multi-core cable 1. The "Z1 direction" represents a bending direction of the core wires 3 as seen in the X direction. The "Z1 direction" is also a moving direction of the separation member 330 as seen in the X direction. As shown in FIG. 10, the Z1 direction and the Z2 direction opposite thereto will be collectively referred to as the "Z direction".

In this embodiment, as shown in FIG. 10, the separation member 330 is rod-like and extends in the Z direction. It should be noted that there is no specific limitation on the shape of the separation member 330. A surface of the separation member 330 facing in the Z1 direction forms a hooking portion (contact surface) 331. It should be noted that the orientation of the hooking portion 331 is not specifically limited. As shown in FIG. 10, the hooking portion 331 is located beyond, in the Z2 direction, the plurality of core wires 3 held by a holding device (not shown). In addition, the hooking portion 331 is provided so as to overlap at least a part of the plurality of core wires 3 as seen in the Z1 direction, which is the moving direction of the separation member 330. Therefore, the hooking portion 331, while being moved in the Z1 direction, contacts the plurality of core wires 3. The hooking portion 331 is away from the drain wire 2 as seen in the Z1 direction, which is the moving direction of the separation member 330. In more detail, the hooking portion 331 is located outer to the drain wire 2 in the Y direction. The separation member 330 is structured such that even while the separation member 330 is moved in the Z1 direction, the hooking portion 331 does not contact the drain wire 2 but passes by the drain wire 2. The separation member 330 is moved between the first position P1, which is beyond, in the Z2 direction, the plurality of core wires 3 in a pre-bending state, and the second position P2, which is set to be beyond the first position P1 in the Z1 direction.

Although not shown, while the separation member 330 is moved in the Z1 direction, the hooking portion 331 does not hook the drain wire 2 but hooks the plurality of core wires 3. As a result, the plurality of core wires 3 are bent in the Z1 direction but the drain wire 2 is not bent and is left behind the movement of the separation member 330. In this manner, the drain wire 2 and the core wires 3 are separated from each other.

In this embodiment, the hooking portion 331 is located beyond the plurality of core wires 3 in the Z2 direction, which is opposite to the moving direction Z1. While the separation member 330 is moved in the Z1 direction, the hooking portion 331 is moved so as to cross the axis of the multi-core cable 1 as seen in the Y direction. Therefore, the separation member 330 is moved in the Z1 direction, and as a result, the hooking portion 331 hooks the core wires 3.

In addition, while the separation member 330 is moved in the Z1 direction, the hooking portion 331 overlaps at least a part of the plurality of core wires 3 as seen in the Z1 direction. Therefore, the separation member 330 is moved in the Z1 direction, and as a result, the hooking portion 331 hooks the core wires 3. While the separation member 330 is moved in the Z1 direction, the hooking portion 331 is away from the drain wire 2 as seen in the Z1 direction. Therefore, even while the separation member 330 is moved in the Z1 direction, the drain wire 2 is not hooked by the hooking portion 331 and thus is not bent.

In this embodiment, the separation member 330 is moved in the Z1 direction linearly. The separation member 330 is not limited to being moved on a straight moving route. The separation member 330 may be moved on any moving route by which the hooking portion 331 does not hook the drain wire 2 but hooks the plurality of core wires 3. There is no further limitation on the moving route of the separation member 330. For example, the moving route of the separation member 330 may be curved.

The above-described embodiments do not limit the present invention unless otherwise specified. For example, in the above-described embodiments, the hooking portion is short in the axial direction of the multi-core cable. Alternatively, the hooking portion may be long in this direction. For example, the length of the hooking portion in the axial direction of the multi-core cable may be at least half of the length of a portion of the multi-core cable that is closer to the tip portion thereof than the holding device. Such a hooking portion may be combined with a moving device that causes the separation member to pivot about the pivoting shaft, like the one in embodiment 3.

### Reference Signs List

- 1: multi-core cable
- 2: drain wire
- 3: core wire
- 10: core wire separation apparatus
- 20: holding device
- 30: clamp (separation member)
- 31: first clamp arm
- 31a: first arm
- 31b: first claw (first hooking portion)
- 31b1: first contact surface
- 31d: first restriction bar (restriction portion)
- 32: second clamp arm
- 32a: second arm
- 32b: second claw (second hooking portion)
- 32b1: second contact surface
- 32d: second restriction bar (restriction portion)
- 36: driving mechanism
- 40: moving device

## Claims

1. A core wire separation apparatus, comprising:
a holding device holding a multi-core cable including a drain wire and a plurality of core wires each exposed from a sheath;
a separation member separating the drain wire and the plurality of core wires from each other; and
a moving device moving the separation member in a moving direction crossing an axial direction of the multi-core cable held by the holding device,
wherein the separation member includes a hooking portion that does not hook the drain wire but hooks the plurality of core wires while the separation member is moved in the moving direction.

2. The core wire separation apparatus according to claim 1, wherein the hooking portion is located beyond, in a direction opposite to the moving direction, the plurality of core wires held by the holding device, and while the separation member is moved in the moving direction, the hooking portion is moved so as to cross an axis of the multi-core cable as seen in a perpendicular direction perpendicular to the axial direction of the multi-core cable and to the moving direction.

3. The core wire separation apparatus according to claim 1 or 2, wherein the hooking portion is located beyond, in a direction opposite to the moving direction, the plurality of core wires held by the holding device, and while the separation member is moved in the moving direction, the hooking portion overlaps at least a part of the plurality of core wires and is away from the drain wire as seen in the moving direction.

4. The core wire separation apparatus according to any one of claims 1 through 3, wherein where a direction perpendicular to the axial direction of the multi-core cable and to the moving direction is referred to as a perpendicular direction, one of two components of the perpendicular direction is referred to as a first perpendicular direction, and the other of the two components of the perpendicular direction is referred to as a second perpendicular direction,
the holding device holds the multi-core cable such that a part of the plurality of core wires is located beyond the drain wire in the first perpendicular direction and another part of the plurality of core wires is located beyond the drain wire in the second perpendicular direction, and
the hooking portion includes:
a first hooking portion located beyond, in the first perpendicular direction, the drain wire held by the holding device, and
a second hooking portion located beyond, in the second perpendicular direction, the drain wire held by the holding device.

5. The core wire separation apparatus according to claim 4, wherein:
the separation member further includes a driving mechanism moving the first hooking portion and the second hooking portion in the perpendicular direction, and
the driving mechanism allows the first hooking portion to retract to a position beyond, in the first perpendicular direction, the plurality of core wires held by the holding device, and allows the second hooking portion to retract to a position beyond, in the second perpendicular direction, the plurality of core wires held by the holding device.

6. The core wire separation apparatus according to claim 4 or 5, wherein the separation member further includes:
a first arm provided beyond the first hooking portion in the first perpendicular direction and extending so as to cross the plurality of core wires held by the holding device as seen in the perpendicular direction, and
a second arm provided beyond the second hooking portion in the second perpendicular direction and extending so as to cross the plurality of core wires held by the holding device as seen in the perpendicular direction.

7. The core wire separation apparatus according to claim 6, wherein:
the separation member further includes a driving mechanism moving at least one of the first arm and the second arm in the perpendicular direction, and
the driving mechanism moves at least one of the first arm and the second arm to cause the first arm and the second arm to grip the plurality of core wires.

8. The core wire separation apparatus according to any one of claims 1 through 7, wherein the separation member includes a restriction portion located beyond, in the moving direction, the plurality of core wires held by the holding device.

9. The core wire separation apparatus according to any one of claims 1 through 8, wherein:
the drain wire and the plurality of core wires are exposed from the sheath at a tip portion of the multi-core cable, and
the moving direction is oblique with respect to the axial direction of the multi-core cable so as to be farther away from an axis of the multi-core cable as being closer to the tip portion of the multi-core cable.

10. The core wire separation apparatus according to claim 9, wherein:
the hooking portion includes a contact surface contacting the plurality of core wires while the separation member is moved in the moving direction, and
the contact surface extends in a direction oblique with respect to the axial direction of the multi-core cable so as to be farther away from the axis of the multi-core cable as being closer to the tip portion of the multi-core cable.

11. The core wire separation apparatus according to any one of claims 1 through 10, wherein while the separation member is moved in the moving direction, the hooking portion first hooks a border portion, of the plurality of core wires, bordering on the sheath.
